# DEMANDE DE BREVET EUROPEEN

(11) **EP 1 864 880 A1**
(43) Date de publication de la demande: **12.12.2007**
(21) Numéro de dépôt: 07301029.0
(22) Date de dépôt: 10.05.2007
(51) Int. Cl.: B60T 13/52, B60T 13/57, B60T 17/02, B60T 13/565

(54) **Servomoteur pneumatique d'assistance au freinage en pression d'un véhicule**

(30) Priorité: 06.06.2006 WO PCT/FR2006/052028
(71) Demandeur: Peugeot Citroen Automobiles SA, 78943 Vélizy-Villacoublay Cedex (FR)
(72) Inventeur: Bailleux, François, 91400 Saclay (FR)

(57) **Abrégé**

La présente invention concerne un servomoteur pneumatique d'assistance au freinage en pression d'un véhicule.

Le servomoteur est caractérisé en ce que la chambre arrière (7) est soumise à une pression constante supérieure à la pression atmosphérique et la chambre avant (8) est soumise à une pression variant entre la pression dans la chambre arrière (7) et la pression atmosphérique par un moyen de valve d'assistance (24, 25, 26) actionné par un plongeur (13) solidaire de l'extrémité avant d'une tige de commande (16) dont l'extrémité arrière est liée à une pédale de frein du véhicule.

L'invention trouve application dans le domaine de l'automobile.

## Description

La présente invention concerne un servomoteur automatique d'assistance au freinage en pression d'un véhicule.

Les servomoteurs actuellement connus pour fournir une assistance au freinage de véhicules automobiles comprennent une enveloppe rigide à l'intérieur de laquelle est mobile une cloison à membrane et jupe de renforcement délimitant une chambre avant reliée en permanence à une source de dépression et une chambre arrière pouvant être reliée sélectivement à la chambre avant ou à l'atmosphère par un moyen de valve actionné par une tige de commande se déplaçant dans un piston mobile tubulaire logé dans l'enveloppe en fonction d'un effort axial d'entrée exercé vers l'avant par une pédale de frein du véhicule.

De tels servomoteurs pouvaient être utilisés dans les véhicules à moteurs à essence pourvus d'un carburateur apte à fournir une source de dépression au col du venturi d'admission.

L'arrivée des moteurs à essence à injection et des moteurs diesels nécessite d'implanter dans le compartiment moteur du véhicule une pompe à vide qui équipe maintenant tous les véhicules actuels.

En outre, à cause des augmentations des masses et des diamètres extérieurs des roues de véhicules actuels exigeant plus de couple d'entraînement des roues et, par conséquent, plus de pression dans les freins, les servomoteurs pneumatiques doivent eux-mêmes être augmentés en diamètre et, le cas échéant, comporter des double membranes. Dans ces conditions, ces servomoteurs deviennent plus difficiles à implanter dans le compartiment moteur du véhicule, et sont plus lourds et plus onéreux.

Enfin, ces dix dernières années, les servomoteurs d'assistance au freinage ont été conçus pour procurer un agrément de freinage au conducteur du véhicule avec moins d'effort à exercer sur la pédale de frein pour un freinage encore plus énergique. Cette conception va de paire avec une augmentation des dimensions de l'enveloppe de ces servomoteurs connus.

La présente invention a pour but d'éliminer les inconvénients ci-dessus des servomoteurs connus d'assistance au freinage de véhicules automobiles en proposant un servomoteur pneumatique d'assistance au freinage qui, à puissance égale, a un diamètre d'enveloppe deux fois moindre.

A cet effet, le servomoteur pneumatique d'assistance au freinage d'un véhicule de l'invention comprend une enveloppe rigide à l'intérieur de laquelle est monté coulissant un piston tubulaire dont une partie avant supporte une jupe de renforcement d'une membrane mobile délimitant dans l'enveloppe une chambre arrière soumise à une pression constante supérieure à la pression atmosphérique et une chambre avant soumise à une pression variant entre la pression dans la chambre arrière et la pression atmosphérique par un moyen de valve d'assistance actionné par un plongeur monté à coulissement dans un tube interne concentrique du piston tubulaire et solidaire de la jupe, le plongeur étant solidaire de l'extrémité d'une tige de commande pouvant se déplacer dans le piston tubulaire en fonction d'un effort axial d'entrée exercé vers l'avant par une pédale de frein du véhicule reliée à l'extrémité arrière de la tige de commande, le moyen de valve d'assistance pouvant occuper sélectivement une position de fermeture isolant la chambre arrière de la chambre avant dans laquelle la pression est égale à la pression constante dans la chambre arrière et une position d'ouverture reliant à l'atmosphère la chambre avant.

De préférence, le moyen de valve d'assistance comprend un clapet annulaire monté dans le piston tubulaire et deux sièges de valve annulaires formés respectivement sur la face d'extrémité arrière du plongeur et la face d'extrémité arrière du tube interne du piston tubulaire, le clapet annulaire étant constamment sollicité vers l'avant par un ressort de compression interposé entre le clapet et une paroi transversale d'extrémité arrière du piston tubulaire de manière à être en appui étanche sur les deux sièges de valve pour isoler l'une de l'autre les deux chambres avant et arrière ou sur l'un ou l'autre de ces sièges pour mettre à l'atmosphère la chambre avant lors du déplacement de la tige de commande par actionnement de la pédale de frein ou lors du relâchement de cette dernière suivant la position du plongeur dans le tube interne du piston tubulaire.

Un ressort de poussée est logé dans le tube interne du piston tubulaire en étant interposé entre la jupe et le plongeur coaxialement à la tige de commande, un orifice de passage d'air est réalisé dans la jupe pour la mise à l'atmosphère de la chambre avant au travers du tube interne, du clapet annulaire dégagé uniquement du siège de valve de la face d'extrémité arrière du plongeur et une extrémité arrière du piston tubulaire communiquant à l'extérieur, et un orifice est réalisé dans la paroi latérale du piston tubulaire pour mettre en communication les deux chambres avant et arrière au travers du clapet dégagé uniquement du siège de valve de la face d'extrémité arrière du piston tubulaire, du tube interne et de l'orifice de la jupe.

La tige de commande se déplace dans le piston tubulaire et le tube interne à l'encontre de la force de rappel d'un ressort de compression logé dans un capot cylindrique solidaire de la paroi arrière de l'enveloppe.

La jupe est solidaire d'une tige d'actionnement d'un maître cylindre associé au servomoteur.

La chambre arrière est remplie d'air sous pression au travers d'un orifice de la paroi de l'enveloppe délimitant cette chambre et pouvant être obturé par un clapet de protection.

Avantageusement, un réservoir constituant une chambre d'air sec à la pression atmosphérique est accolé à la chambre arrière de manière que la mise à l'atmosphère de la chambre avant s'effectue dans le réservoir et que le remplissage d'air sous pression de la chambre arrière s'effectue à partir de l'air prélevé dans ce réservoir par une pompe de compression.

La pompe de compression est logée dans le réservoir d'air sec pour prélever l'air dans ce réservoir et envoyer l'air sous pression dans la chambre arrière.

La pompe de compression, lors d'un manque d'air dans le réservoir, peut aspirer l'air atmosphérique présent dans l'habitacle du véhicule au travers d'un orifice de la paroi arrière du réservoir d'air sec et obturable par un clapet de protection.

La pompe peut être une pompe mixte de compression et à vide, telle qu'une pompe tandem à deux pistons, l'un pour la pression et l'autre la dépression ou peut faire partie de deux pompes à engrenage en tandem.

La pompe de compression peut être raccordée à deux réservoirs respectivement amont dans lequel elle fait le vide et aval dans lequel elle injecte de l'air sous pression introduit dans la chambre arrière.

Le réservoir aval comprend un clapet de décharge à l'atmosphère d'air sous pression lorsque la pression dans ce réservoir dépasse une valeur de seuil déterminée correspondant à la pression régnant dans la chambre arrière, par exemple d'environ 4 bars et le réservoir amont comprend un clapet s'ouvrant à l'atmosphère lorsque la dépression dans ce réservoir est en dessous d'une valeur de seuil déterminée, par exemple d'environ 0,7 bar.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple et illustrant plusieurs modes de réalisation de l'invention et dans lesquels :
- la figure 1 est une vue en coupe d'un servomoteur conforme à l'invention ;
- les figures 2 à 5 sont des vues de la partie essentielle du servomoteur de l'invention et représentant le fonctionnement de ce servomoteur ;
- la figure 6 représente une variante de réalisation du servomoteur de l'invention ; et
- la figure 7 représente une pompe pouvant être utilisée avec le servomoteur de l'invention.

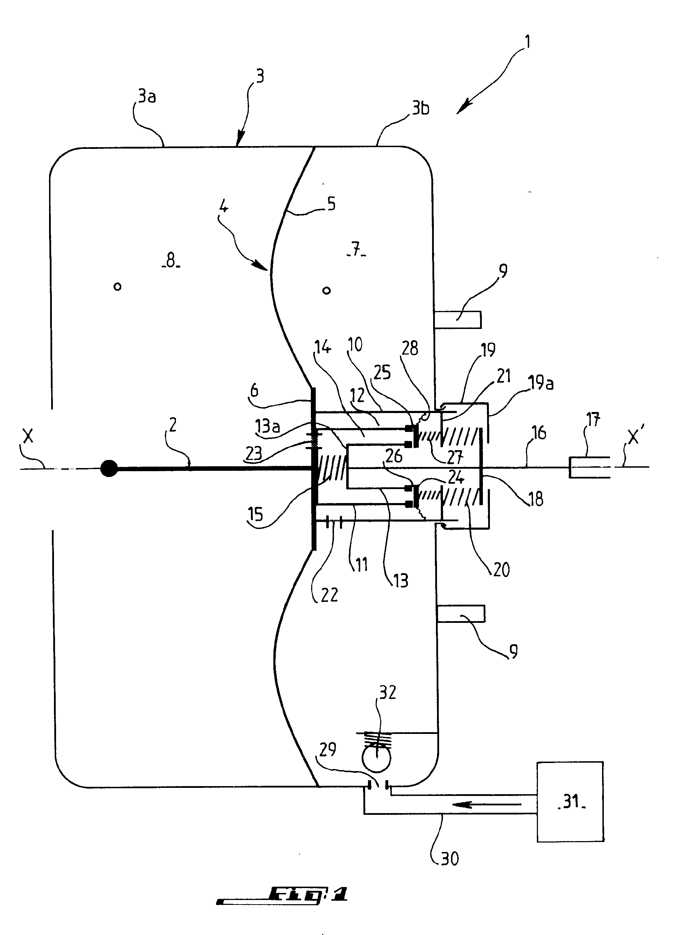

Le servomoteur pneumatique d'assistance au freinage, tel que représenté en figure 1, est destiné à être placé, comme cela est connu en soi, entre la pédale de frein d'un véhicule et le maître cylindre permettant de commander le circuit de freinage hydraulique du véhicule.

Par convention, le terme "avant" désigne des éléments du servomoteur dirigé vers le maître cylindre et le terme "arrière" désigne des éléments du servomoteur dirigés vers la pédale de frein du véhicule. Autrement dit, l'avant est à gauche tandis que l'arrière est à droite en considérant les figures 1 à 6.

En se reportant aux figures, la référence 1 désigne le servomoteur d'un servofrein pneumatique permettant de fournir une assistance au freinage de véhicules automobiles et destiné à actionner un maître cylindre dont seul la tige d'actionnement 2 est représentée.

Le servomoteur 1 comprend une enveloppe rigide 3, définissant une coquille avant 3a et une coquille arrière 3b, à l'intérieur de laquelle est montée mobile une cloison sensiblement transversale 4 constituée d'une membrane déroulante souple en élastomère 5 et d'une jupe en forme de disque 6 renforçant la partie centrale de la membrane 5. La membrane 5 est susceptible de solliciter la tige 2 d'actionnement du maître cylindre associé au servomoteur 1 en étant solidarisée à la jupe centrale 6.

La membrane 5 délimite à l'intérieur de l'enveloppe 3 une chambre arrière 7 et une chambre avant 8.

La membrane 5 a son bord périphérique externe qui est fixé de façon étanche à la jonction de deux coquilles avant 3a et arrière 3b de cette enveloppe.

L'enveloppe 3 du servomoteur 1 est logée dans le compartiment moteur du véhicule et fixée par des moyens 9 au tablier (non représenté) séparant le compartiment moteur de l'habitacle du véhicule.

Un ressort de compression, non représenté, est interposé entre la paroi avant de la coquille avant 3a et la jupe centrale 6 de manière à maintenir normalement cette dernière dans une position arrière de repos illustrée notamment en figure 1.

Selon l'invention, la chambre arrière 7 est soumise à une pression constante déterminée supérieure à la pression atmosphérique pouvant être fixée, à titre d'exemple, à environ 4 bars, tandis que la chambre avant 8 est soumise à une pression variant entre la pression régnant dans la chambre arrière 7 et la pression atmosphérique sous l'assistance d'un moyen de valve comme on le verra ultérieurement.

Un piston creux tubulaire 10 est monté coulissant dans l'enveloppe 3 coaxialement à l'axe de symétrie de révolution X-X' de l'enveloppe et a sa partie arrière traversant de façon étanche la paroi arrière de la coquille arrière 3b de cette enveloppe 3. Le piston tubulaire 10 a sa partie avant supportant la jupe de renforcement 6 de la membrane 5.

Un tube cylindrique creux 11 est logé à l'intérieur du piston tubulaire 10 en ayant sa partie avant également solidaire de la jupe 6. Le tube 11 est monté concentriquement dans le piston 10, a une longueur inférieure à la longueur du piston 10 et définit avec ce dernier un espace annulaire 12.

Un plongeur formant poussoir 13 est monté à coulissement dans le tube interne 11 et présente une forme générale de cylindre de plus courte longueur que le tube 11 en définissant avec ce dernier un espace annulaire 14. Un ressort de poussée 15 est interposé entre la jupe 6 et la paroi transversale d'extrémité avant 13a du plongeur 13. Ce dernier est solidaire de l'extrémité avant d'une tige de commande 16 pouvant se déplacer dans le piston tubulaire 10 et le tube interne 11, coaxialement à l'axe X-X', en fonction d'un effort axial d'entrée exercé vers l'avant par une pédale de frein, non représentée, reliée à l'extrémité arrière de la tige de commande 16 par l'intermédiaire d'une chape d'articulation 17.

La tige de commande 16 comporte une collerette 18 logée dans un capot externe de forme générale cylindrique 19 solidaire de la paroi arrière de la coquille arrière 3b de l'enveloppe 3 coaxialement à la tige de commande 16. Un ressort de compression 20 est monté précontraint entre la collerette 18 et une paroi transversale d'extrémité arrière 21 du piston tubulaire 10. De la sorte, la tige de commande 16 se déplace dans le piston 10 à l'encontre d'un effort de rappel exercé par le ressort 20.

La paroi latérale du piston tubulaire 10 est pourvue d'un orifice 22 mettant en communication la chambre arrière 7 avec l'espace annulaire 12 et un orifice 23 traverse la jupe 6 et la paroi transversale du tube 11 de manière à mettre en communication la chambre avant 8 avec l'espace annulaire 14 ainsi que l'espace entre le plongeur 13 et la jupe 6.

Le moyen de valve d'assistance comprend un clapet annulaire 24 monté dans le piston tubulaire 10 et deux sièges de valve annulaire 25, 26 formés respectivement sur la face d'extrémité arrière du tube interne 11 et la face d'extrémité arrière du plongeur 13. Le clapet annulaire 24 est constamment sollicité vers l'avant par un ressort de compression 27 interposé entre le clapet 24 et la paroi transversale 21 qui comporte un orifice central 21a mettant en communication le piston tubulaire 10 avec l'intérieur du capot 19.

La paroi arrière 19a du capot 19 est également pourvue d'un orifice central débouchant dans l'habitacle du véhicule.

Le bord périphérique externe du clapet annulaire 24 est raccordé à la face interne de la partie d'extrémité arrière du piston tubulaire 10 par l'intermédiaire d'une membrane souple étanche 28 en forme de soufflet autorisant le déplacement du clapet 24 suivant la direction de l'axe X-X'.

La paroi latérale de la coquille arrière 3b de l'enveloppe 3 est pourvue d'un orifice 29 permettant l'introduction de l'air sous pression dans la chambre arrière 7. L'orifice 29 est raccordé à une conduite externe 30 dont l'extrémité opposée est raccordée à la sortie d'une pompe de compression 31, par exemple du type électrique.

L'orifice 29 est normalement obturé par un clapet de protection 32 logé dans la chambre arrière 7 pour maintenir la pression d'air à la valeur déterminée par exemple de 4 bars.

Le fonctionnement du servomoteur de l'invention va être maintenant décrit en référence aux figures 1 à 5.

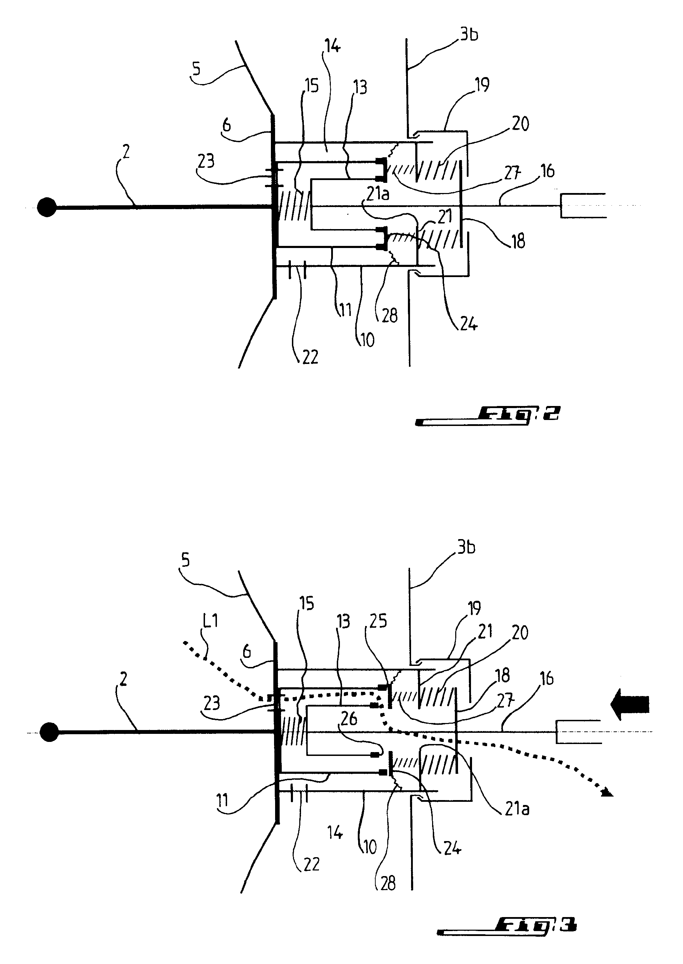

Les figures 1 et 2 représentent le servomoteur 1 à l'état de repos auquel aucun effort n'est appliqué sur la tige de commande 16 et le clapet annulaire 24 est maintenu en appui étanche sur les deux sièges 25, 26 du tube interne 11 et du plongeur 13, le ressort 27 étant taré à une valeur de compression supérieure à la pression constante d'air régnant dans la chambre arrière 7. De la sorte, aucune communication n'est établie entre les deux chambres arrière 7 et avant 8 qui sont isolées l'une de l'autre avec la chambre avant 8 contenant de l'air sous la même pression que l'air contenu dans la chambre 7.

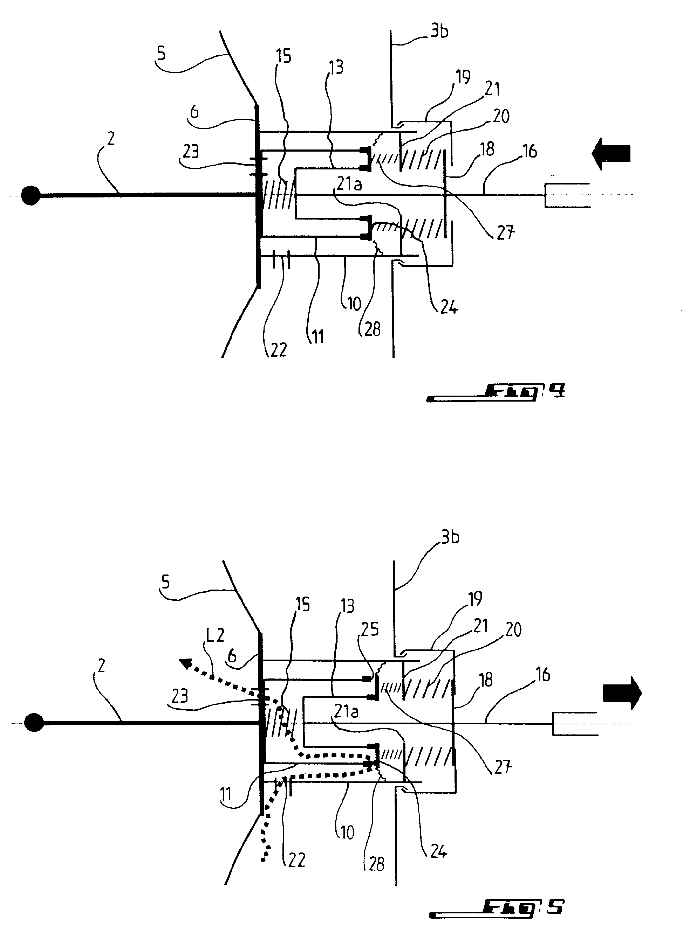

La figure 3 représente une phase de mise en freinage lors de l'application d'un effort sur la pédale de frein qui provoque le déplacement en translation de la tige de commande 16 vers l'avant suivant un effort permettant le déplacement du plongeur 13 à l'encontre de la force de rappel du ressort de poussée 15 qui est comprimé de manière à désengager le siège de valve annulaire 26 du plongeur 13 du clapet annulaire 24 qui reste maintenu en appui étanche sur le siège de valve annulaire du tube interne 11. Dans ces conditions, l'ouverture du clapet 24 relativement au plongeur 13 amène l'air sous pression dans la chambre avant 8 à s'échapper à l'atmosphère dans l'habitacle du véhicule au travers de l'orifice 23, de l'espace annulaire 14, du clapet ouvert 24, de l'orifice central 21a (ouvert par la collerette 18) de la paroi transversale 21 du piston tubulaire 10 et de l'orifice central de la paroi arrière 19a du capot 19 comme indiqué par la ligne en pointillés L1. La chambre avant 8 est ainsi amenée à la pression atmosphérique.

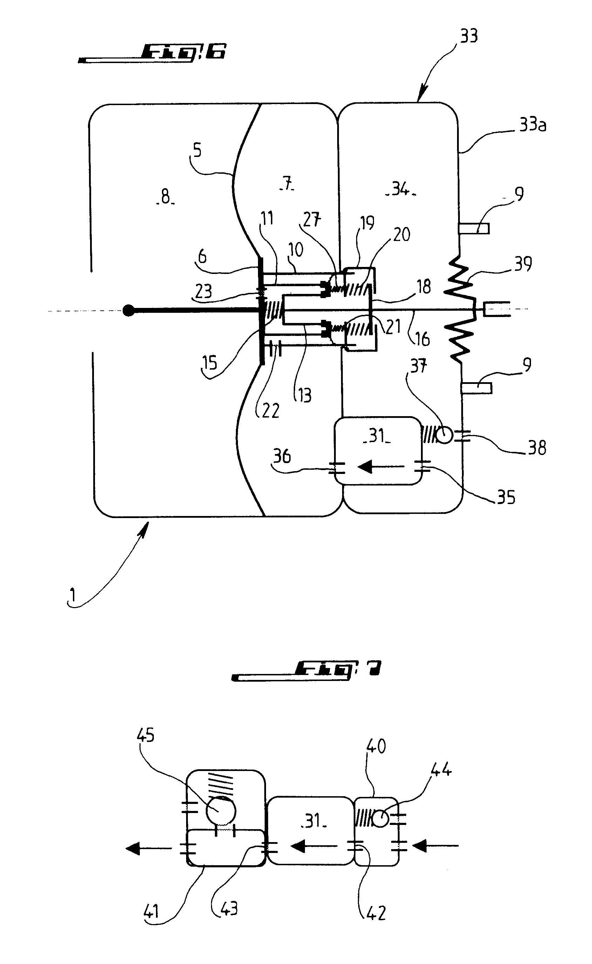

La mise à la pression atmosphérique de la chambre avant 8 entraîne le déplacement de la membrane 5 vers le maître cylindre, puis un équilibre des courses des différents éléments du servomoteur s'établi de manière à amener à nouveau le clapet 24 en appui étanche sur le siège annulaire du plongeur 13 et de façon que les efforts constants soient maintenus pour le freinage comme représenté en figure 4. De la sorte, les chambres arrière 7 et avant 8 sont à nouveau isolées l'une de l'autre avec la pression d'air dans la chambre avant 8 à la pression atmosphérique et la pression dans la chambre arrière 7 à la pression constante, par exemple de 4 bars, valeur de pression correspondant à un freinage maximum.

La figure 5 représente le servomoteur en situation de défreinage à laquelle la pédale de frein est relâchée pour déplacer vers l'arrière la tige de commande 16 et le ressort 15 se détend en s'allongeant pour exercer un effort de poussée vers l'arrière sur le plongeur 13 qui décolle le clapet annulaire 24 du siège annulaire 25 du tube interne 11 de manière à mettre en communication la chambre arrière 7 avec la chambre avant 8 au travers de l'orifice 22, l'espace entre le plongeur 13 et le tube interne 11 et l'orifice 23 comme indiqué par la ligne en pointillés L2 de la figure 5. De la sorte, la pression dans la chambre avant 8 augmente jusqu'à la valeur de pression régnant dans la chambre 7 et l'équilibre de pression dans ces chambres ramène la membrane 5 à sa position d'origine de repos de la figure 2 pour ramener à nouveau le clapet annulaire 24 en appui étanche sur le siège d'étanchéité 25 du tube interne 11.

Le capot cylindrique 19 a pour fonction de protéger le piston 10 qui se déplace dans la chambre arrière 7 en fonction du freinage et il sert également d'appui à la tige de commande 16 par l'intermédiaire de sa collerette 18 lors de la situation de défreinage du véhicule.

La figure 6 représente une variante de réalisation selon laquelle un réservoir de réserve 33 contenant de l'air sec à la pression atmosphérique est accolé à la paroi arrière de la coquille arrière 3b de l'enveloppe 3 de façon que le capot 19 du servomoteur 1 soit logé dans le réservoir 33 qui est alors fixé au tablier par les moyens de fixation 9. Ainsi, la mise à la pression atmosphérique de la chambre avant 8 lors de la situation de mise en freinage de la figure 3 s'effectue dans la chambre 34 du réservoir 33. Avantageusement, la pompe de compression 31 est logée dans le réservoir 33 et permet d'aspirer l'air sec présent dans la chambre 34 de ce réservoir au travers d'un orifice 35 et de remplir la chambre arrière 7 d'air sous pression au travers de l'orifice de remplissage 36 pour amener la pression d'air dans cette chambre à sa valeur de pression constante, par exemple de 4 bars. Un clapet de protection 37 est prévu dans la chambre 34 du réservoir 33 pour obturer un orifice 38 réalisé à travers la paroi arrière 33a du réservoir 33 et qui permet de s'ouvrir pour aspirer de l'air de l'habitacle du véhicule lors d'un manque d'air à pression atmosphérique dans la chambre 34 du réservoir 33, l'air présent dans l'habitacle étant beaucoup moins humide que l'air présent sous le capot moteur du véhicule.

La figure 6 montre que la tige de commande 16 traverse de façon étanche une membrane souple en matériau élastomère 39 obturant de façon étanche une ouverture centrale de la paroi 33a du réservoir 33 de manière que la membrane 39 puisse suivre le déplacement axial de la tige de commande 16.

La variante de réalisation ci-dessus décrite de la figure 6 permet d'éviter à la pompe de compression 31 d'entraîner des impuretés et de l'humidité dans la chambre arrière 7. En faisant fonctionner la pompe en circuit fermé pour qu'elle aspire l'air dans l'habitacle, aucun risque de pollution du servomoteur n'est à craindre.

Selon une alternative, il est également possible de conserver le réservoir 33 accolé à la chambre arrière 7 du servomoteur 1 pour constituer une réserve d'air sec à pression atmosphérique, mais avec la pompe de compression 31 située à l'extérieur du réservoir. Dans ce cas, la pompe 31 serait reliée par des conduits extérieurs d'une part à la chambre 34 du réservoir 33 pour aspirer l'air sec dans cette chambre et d'autre part à la chambre arrière 7 du servomoteur 1 pour remplir celle-ci d'air sec sous pression, par exemple de 4 bars.

La figure 7 représente une configuration de montage de pompe mixte permettant de disposer non seulement d'air sous pression pour le servomoteur 1 de l'invention fonctionnant en pression, mais également d'une source de dépression pouvant être utilisée pour un servomoteur classique à dépression pour un véhicule devant être équipé d'un servomoteur classique.

La pompe mixte 31 peut être une pompe tandem à deux pistons, l'un des pistons permettant de générer la pression pour le servomoteur de l'invention, l'autre piston fournissant la dépression pour le servomoteur classique ou constituée par deux pompes à engrenages en tandem.

Selon la figure 7, il est également possible d'utiliser une seule pompe de compression 31 raccordée à deux réservoirs respectivement amont 40 et aval 41, la pompe communiquant avec le réservoir amont 40 par un orifice 42 tandis qu'elle communique avec le réservoir aval 41 par un orifice 43. Ainsi, la pompe 31 permet d'aspirer l'air présent dans le réservoir 40 pour faire le vide dans celui-ci et fournit de l'air comprimé dans le réservoir 41 de façon à pouvoir disposer au choix d'une source de compression ou une source de dépression. Le réservoir 40 contient un clapet de protection 44 taré à une valeur telle qu'il s'ouvre si la dépression dans le réservoir 40 est en dessous d'une valeur de seuil déterminée, par exemple de 0,7 bar. Le réservoir 41 comprend également un clapet de protection 45 s'ouvrant si la pression dans le réservoir 41 dépasse une valeur de seuil déterminée, par exemple de 4 bars. Les fonctions accomplies par les clapets 44, 45 pouvant être également accomplies par un ensemble à électrovannes et capteurs de pression à débits calés sur des valeurs de pression proches de celles qui viennent d'être mentionnées.

Le servomoteur de l'invention présente ainsi les avantages suivants par rapport à un servomoteur classique :
- il permet d'augmenter la capacité d'assistance au freinage du véhicule automobile,
- il réduit le diamètre externe de l'enveloppe du servomoteur ou amplificateur de frein, par exemple d'un rapport de deux pour une pression de fonctionnement de 4 bars de la chambre arrière en comparaison au servomoteur classique à dépression de 0,7 bar ;
- la réduction de dimension en diamètre de l'enveloppe du servomoteur de l'invention s'accompagne d'une diminution de masse et, par conséquent, d'une réduction des coûts ;
- la réduction de la taille du servomoteur permet d'en faciliter son implantation dans un véhicule automobile ;
- il permet d'utiliser la technologie d'amplificateur d'air comprimé ; et
- il permet de partager la source de pression avec d'autres applications, telles que par exemple le gonflage des pneumatiques, la suspension du véhicule,..., tout en gardant la possibilité de bénéficier d'une source de dépression utilisable par des servomoteurs classiques à dépression.

## Revendications

1. Servomoteur pneumatique d'assistance au freinage d'un véhicule, comprenant une enveloppe rigide (3) à l'intérieur de laquelle est monté coulissant un piston tubulaire (10) dont une partie avant supporte une jupe (6) de renforcement d'une membrane mobile (5) délimitant dans l'enveloppe (3) une chambre arrière (7) soumise à une pression constante supérieure à la pression atmosphérique et une chambre avant (8) soumise à une pression variant entre la pression dans la chambre arrière (7) et la pression atmosphérique par un moyen de valve d'assistance (24,25,26) actionné par un plongeur (13) monté à coulissement dans un tube interne concentrique (11) du piston tubulaire (10) et solidaire de la jupe (6), le plongeur (13) étant solidaire de l'extrémité d'un tige de commande (16) pouvant se déplacer dans le piston tubulaire (10) en fonction d'un effort axial d'entrée exercé vers l'avant par une pédale de frein du véhicule reliée à l'extrémité arrière de la tige de commande (16), le moyen de valve d'assistance (24,25,26) pouvant occuper sélectivement une position de fermeture isolant la chambre arrière (7) de la chambre avant (8) dans laquelle la pression est égale à la pression constante dans la chambre arrière (7) et une position d'ouverture reliant à l'atmosphère la chambre avant (8).

2. Servomoteur selon la revendication 1, **caractérisé en ce que** le moyen de valve d'assistance comprend un clapet annulaire (24) monté dans le piston tubulaire (10) et deux sièges de valve annulaires (25,26) formés respectivement sur la face d'extrémité arrière du plongeur (13) et la face d'extrémité arrière du tube interne (11) du piston tubulaire (10), le clapet annulaire (24) étant constamment sollicité vers l'avant par un ressort de compression (27) interposé entre le clapet (24) et une paroi transversale d'extrémité arrière (21) du piston tubulaire (10) de manière à être en appui étanche sur les deux sièges de valve (25,26) pour isoler l'une de l'autre les deux chambres avant (8) et arrière (7) ou sur l'un ou l'autre de ces sièges pour mettre à l'atmosphère la chambre avant (8) lors du déplacement de la tige de commande (16) par actionnement de la pédale de frein ou lors du relâchement de cette dernière suivant la position du plongeur (13) dans le tube interne (11) du piston tubulaire (10).

3. Servomoteur selon la revendication 2, **caractérisé en ce qu'**un ressort de poussée (15) est logé dans le tube interne (11) du piston tubulaire (10) en étant interposé entre la jupe (6) et le plongeur (13) coaxialement à la tige de commande (16), **en ce qu'**un orifice de passage d'air (23) est réalisé dans la jupe (6) pour la mise à l'atmosphère de la chambre avant (8) au travers du tube interne (11), du clapet annulaire (24) dégagé uniquement du siège de valve (26) de la face d'extrémité arrière du plongeur (13) et d'une extrémité arrière du piston tubulaire (10) communiquant à l'extérieur, et **en ce qu'**un orifice (22) est réalisé dans la paroi latérale du piston tubulaire (10) pour mettre en communication les deux chambres avant (8) et arrière (7) au travers du clapet (24) dégagé uniquement du siège de valve (25) de la face d'extrémité arrière du piston tubulaire (10), du tube interne (11) et de l'orifice (23) de la jupe (6).

4. Servomoteur selon l'une des revendications précédentes, **caractérisé en ce que** la tige de commande (16) se déplace dans le piston tubulaire (10) et le tube interne (11) à l'encontre de la force de rappel d'un ressort de compression (20) logé dans un capot cylindrique (19) solidaire de la paroi arrière de l'enveloppe (3).

5. Servomoteur selon l'une des revendications précédentes, **caractérisé en ce que** la jupe (6) est solidaire d'une tige (2) d'actionnement d'un maître cylindre associé au servomoteur (1).

6. Servomoteur selon l'une des revendications précédentes, **caractérisé en ce que** la chambre arrière (8) est remplie d'air sous pression au travers d'un orifice (29) de la paroi de l'enveloppe (3) délimitant cette chambre et pouvant être obturé par un clapet de protection (32).

7. Servomoteur selon l'une des revendications précédentes, **caractérisé en ce qu'**un réservoir (33) constituant une chambre d'air sec à la pression atmosphérique est accolé à la chambre arrière (7) de manière que la mise à l'atmosphère de la chambre avant (8) s'effectue dans le réservoir (33) et que le remplissage d'air sous pression de la chambre arrière (7) s'effectue à partir de l'air prélevé dans ce réservoir par une pompe de compression (31).

8. Servomoteur selon la revendication 7, **caractérisé en ce que** la pompe de compression (31) est logée dans le réservoir d'air sec (33) pour prélever l'air dans ce réservoir et envoyer l'air sous pression dans la chambre arrière (7).

9. Servomoteur selon la revendication 8, **caractérisé en ce que** la pompe de compression (31), lors d'un manque d'air dans le réservoir (33), peut aspirer l'air atmosphérique présent dans l'habitacle du véhicule au travers d'un orifice (38) de la paroi arrière (33a) du réservoir (33) et obturable par un clapet de protection (37).

10. Servomoteur selon la revendication 8 ou 9, **caractérisé en ce que** la pompe (31) est une pompe mixte de compression et à vide, telle qu'une pompe tandem à deux pistons, l'un pour la pression et l'autre la dépression ou fait partie de deux pompes à engrenage en tandem.

11. Servomoteur selon la revendication 8 ou 9, **caractérisé en ce que** la pompe de compression (31) est raccordée à deux réservoirs respectivement amont (40) dans lequel elle fait le vide et aval (41) dans lequel elle injecte de l'air sous pression introduit dans la chambre arrière (7).

12. Servomoteur selon la revendication 11, **caractérisé en ce que** le réservoir aval (41) comprend un clapet (45) de décharge à l'atmosphère d'air sous pression lorsque la pression dans ce réservoir dépasse une valeur de seuil déterminée correspondant à la pression régnant dans la chambre arrière (7), par exemple d'environ 4 bars, et le réservoir amont (40) comprend un clapet (44) s'ouvrant à l'atmosphère lorsque la dépression dans ce réservoir est en dessous d'une valeur de seuil déterminée, par exemple d'environ 0,7 bar.
